# EUROPEAN PATENT APPLICATION

(11) **EP 4 646 938 A1**
(43) Date of publication of application: **12.11.2025**
(21) Application number: 24174453.1
(22) Date of filing: 07.05.2024
(51) Int. Cl.: A23L 15/00, A23J 1/14, A23J 3/14, A23L 11/00

(54) **A PLANT-BASED FOOD PRODUCT**

(71) Applicant: Unilever IP Holdings B.V., 6708 WH Wageningen (NL)
(72) Inventor: The designation of the inventor has not yet been filed
(74) Representative: Plaggenborg, Menko Bernard

(57) **Abstract**

The present invention relates to a to a plant-based product. More particularly the present invention relates to a plant-based egg analogue product. Although there are prior arts which discloses plant-based egg analogue products, however an improved plant-based egg analogue product which mimics the texture and taste of conventional egg is remains to be desired. Accordingly, the present invention provides a plant protein-based egg analogue composition comprising:
a) 4 to 20 % by weight of mung bean protein isolate,
b) 5 to 20 % by weight of edible vegetable oil,
c) 0.01 - 5% by weight of edible polysaccharide, and
d) Water.

## Description

### Field of the invention

The present invention relates to a plant-based product. More particularly the present invention relates to a plant-based egg analogue product.

### Background and Prior Art

Plant-based products are gaining popularity among consumers because of health and environmental reasons.

Animal-based products, such as meat, fish, and eggs, are consumed mainly because of their taste, high protein content, and other nutritional values that are not available in sufficient amounts in a vegetarian diet. At the same time, animal-originating products also have certain unhealthy substances, such as cholesterol, which is believed to be harmful when consumed excessively. Cholesterol in excess amounts is considered to be harmful for the heart. Also, producing animal products and their supply chain is not environmentally friendly.

Conventional animal-originating eggs are used in versatile applications, such as savouries, baking, and cooking. Conventional eggs are also used for preparing tasty mayonnaises. However, the use of conventional animal-originating eggs poses its own challenges, such as animal welfare, sustainability, and high cholesterol content in eggs.

There are arts which discloses artificial eggs and related food products.

US20230086338 (CLARA FOODS CO., 2023) discloses compositions for preparation of egg-like products.

WO2022269606 (ZERO EGGS LTD., 2023) egg replacement compositions comprising at least 14 wt. percent of protein(s) from a vegetable source, sodium chloride, natural vegetable oil and water, wherein the composition comprises less than 4 percent of hydrocolloids or poly-carbohydrates. The present invention further provides food products comprising the egg replacement composition. The food products of the present invention have organoleptic properties similar to those of a natural egg.

CN114947071 (NORTHEAST AGRICULTURAL UNIV., 2022) discloses preparation method of the egg substitute taking the mung beans as the raw material is characterized by comprising the following steps: (1) cleaning a certain mass of high-quality mung beans, and drying the high-quality mung beans; crushing the dried mung beans by using a crusher, and screening to obtain mung bean powder; (2) degreasing the obtained mung bean powder, adding the degreased mung bean powder and water into a container according to a certain solid-liquid ratio, adjusting the temperature, pH and ultrasonic frequency, carrying out ultrasonic treatment on the mixed solution for a period of time, and carrying out solid-liquid separation by adopting a centrifugal method; and adjusting the pH to be acidic protein precipitation. And (3) carrying out spray drying on the obtained protein precipitate to obtain the mung bean protein powder. And (4) fully dissolving the mung bean protein powder in water, and fully mixing and emulsifying the mung bean protein powder, the tapioca flour, and the soybean lecithin. And (5) carrying out enzyme treatment on the mixed fruit (using glutamine transaminase as a cross-linking agent) and adding rapeseed oil to add fragrance. Secondly, potassium citrate serving as a stabilizer, sodium pyrophosphate serving as an antioxidant, gellan gum, table salt, white sugar and the like are added.

Although the prior arts disclose plant-based egg analogue products, however an improved plant-based egg analogue product which mimics the texture and taste of conventional egg is remains to be desired.

It is therefore an object of the present invention to produce a plant-based product.

It is another object of the present invention to produce a plant-based egg analogue product.

It is yet another object of the present invention to produce a plant-based egg analogue product with similar sensorials and taste as compared with conventional egg.

The present inventors while working on this, have surprisingly found that mung bean protein isolate prepared in a particular way by using electric field and other selected ingredients when combined in a particular manner produce an egg analogue product having similar sensorial and taste to that of conventional egg.

### Summary of the invention

According to a first aspect, A plant protein-based egg analogue composition comprising:
a) 4 to 20 % by weight of mung bean protein isolate,
b) 5 to 20 % by weight of edible vegetable oil,
c) 0.01 - 5% by weight of edible polysaccharide, and
d) Water.

According to a second aspect of the present invention there is provided a process of producing a mung bean protein isolate comprising the step of treating a dispersion of mung bean flour in water with a pulse electric field.

This and other aspects, features and advantages will become apparent to those of ordinary skill in the art from a reading of the following detailed description. For the avoidance of doubt, any feature of one aspect of the present invention may be utilized in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples *per se.* Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

### Detailed description of the invention

The present invention provides a plant protein-based egg analogue composition comprising:
a) 4 to 20 % by weight of mung bean protein isolate,
b) 5 to 20 % by weight of edible vegetable oil,
c) 0.01 - 5% by weight of edible polysaccharide, and
d) Water.

Mung bean (*Vigna radiata*) also known as green gram is a plant species of *Fabaceae.* This is widely consumed throughout the world and known for its high protein content.

The mung bean protein isolate used in the present invention is prepared from the commonly available mung bean using the process of the present invention.

According to the present invention the mung mean protein isolate is prepared using a process comprising the step of treating a dispersion of mung bean flour in water with a pulse electric field.

The process starts with a step of dispersing mung bean flour in water to obtain a dispersion. Preferably distilled water is used for the purpose. After the dispersion is prepared, it is then subjected to a treatment of pulse electric filed.

Pulse Electric Field (PEF) is a non-thermal method preferably used for food preservation. It uses short pulses of high-voltage electricity to inactivate microorganisms and enzymes in food products and thereby preserving the food products. Not wishing to be bound by theory, it is believed that PEF can also increase the extraction of proteins, starches, and other components from plant materials by disrupting the cell membranes and enhancing mass transfer.

The pulse electric filed used in the present invention is preferably having the following characteristics:
1. The strength of the pulse electric field is preferably in the range from 72 µs to 547 µs, more preferably from 100 µs to 500 µs, furthermore preferably from 200 µs 450 µs and most preferably from 300 µs to 400 µs.
2. The pulse frequency of the pulse electric field is preferably in the range from 22 kV/cm to 38 kV/cm, more preferably in the range from 22 kV/cm to 35 kV/cm and most preferably in the range from 25 kV/cm to 35 kV/cm.

The time of treatment is preferably in the range from 10 minutes to 2 hours, more preferably is in the range from 15 minutes to 75 minutes, furthermore preferably is in the range from 20 minutes to 70 minutes and most preferably between 25 minutes to 60 minutes.

After the PEF treatment, the treated solution is preferably subjected to a pH adjustment step. The pH of the solution is adjusted to 8 to 10. Most preferably the pH of the solution is adjusted around 9.

Preferably, after the pH treatment there is a step of addition of sodium tripolyphosphate (STPP).

Sodium tripolyphosphate generally used in the food industry as a food additive. It is commonly used in processed meat industries and also in soy milk. The amount of STPP used in food products is regulated by local regulations which varies between countries.

After this treatment the solution is preferably subjected to a gyratory motion. This was preferably done to separate out the supernatant from the precipitates. Although there is no limitation regarding the instrument to carry out this step, however most preferably a centrifuge is the suitable instrument for carrying out this step.

The precipitates are then preferably recovered as mung bean protein isolates.

The composition of the present invention also comprises 5 to 20 % by weight of edible vegetable oil. The preferred amount of vegetable oil is in the range from 5 to 15% by weight, more preferably 5 to 12% by weight and most preferably 7 to 10% by weight. Any vegetable oil can be used e.g. sunflower oil, rice bran oil, ground nut oil, canola oil, soybean oil, palm oil etc. The most preferred vegetable oil being soybean oil and sunflower oil.

The composition further comprises 0.01 - 5% by weight of edible polysaccharide. The preferred amount of polysaccharide is the formulation is in the range from 0.1 to 5% by weight, more preferably 1 to 5% by weight and most preferably 2 to 4% by weight. There is no restriction on the type of polysaccharides. Any edible polysaccharides may be used for the present invention. Some of the preferred examples of polysaccharides are xanthan gum, guar gum, carrageenan, tara gum, tapioca starch, corn starch, wheat starch, mung bean starch etc.

The composition also comprises water.

The composition may preferably comprise an edible salt. Sodium chloride being the most preferred one.

The composition further comprises an emulsifier. Any food grade emulsifier may preferably be used for this purpose.

Now the invention will be demonstrated by way of following non-limiting examples. The examples provided are for demonstration (enablement) purpose and in no way limiting the scope of the invention.

### Examples

The mung bean protein isolate was prepared using the following method:
Mung bean flour was procured from local market in Shanghai. It was then dispersed in distilled water to make a solution of concentration of 5%. Then the solution was treated at a flow rate of 50 mL/min with pulsed electric field of 350µs. The electric strength was varied between 20kV/cm to 40kV/cm and pulse frequency was 500 Hz and further the pulse width was 2 µs. Then the pH of the dispersion was adjusted to 9. After that sodium tripolyphosphate was added in the solution and stirred at 600 rpm for 3 h at a room temperature, followed by centrifugation (4500 r/min) for 20 min. The ratio of sodium tripolyphosphate to mung bean flour was 0.02:0.08. After that, the supernatant was adjusted to pH=4.5 and centrifuged (around 3000g) for 20 min to obtain the precipitate. The precipitate was dissolved in an appropriate amount of water and adjusted to pH= 7.0. Finally, the protein solution was mixed with 0.2 % of low acyl gellan gum solution and stirred for 10 min, followed by dialysis and freeze-drying to obtain modified mung bean isolate protein.

After the mung bean protein isolate is prepared, it was used for preparing a liquid egg analogue. The liquid egg analogue was prepared by mixing 12% modified mung bean isolate protein, 10% soybean oil, 3% edible polysaccharide (tapioca). Then this mixture was subjected to high-speed emulsification to obtain the liquid egg analogue.

This liquid was then subjected to storage modulus (G') and loss modulus (G") measurements using a DHR-2 Rheometer (TA Instrument). As a control, a real chicken egg liquid was taken.

G' refers to the storage modulus, which represents the elastic part of viscoelastic behaviour and describes the solid-state characteristics of the egg analogue.

G" refers to the loss modulus, which describes the viscous part of viscoelastic behaviour and can also be regarded as the liquid properties of the liquid egg analogue.

The Results are summarized in Table 1 and Table 2.

**Table 1: Measurement of Storage Modulus G' (Pa):**

| PEF Treatment Time (seconds) | Storage Modulus G' (Pa) | | | | |
|---|---|---|---|---|---|
| | PEF Treatment Intensity (kV/cm) | | | | Real egg liquid |
| | 20 | 30 | 35 | 40 | |
| 2005 | 9186.32 | 28411.4 | 28436.3 | 12334.1 | 32166 |
| 2502 | 9368.78 | 29147.4 | 32117.1 | 13457.7 | 31959.7 |
| 3000 | 9467.75 | 29759.8 | 35315.7 | 13820.6 | 31927.3 |

**Table 2: Measurement of loss Modulus G" (Pa):**

| PEF Treatment Time (seconds) | Storage Modulus G" (Pa) | | | |
|---|---|---|---|---|
| | PEF Treatment Intensity (kV/cm) | | | Real egg liquid |
| | 20 | 30 | 40 | |
| 2005 | 1743.58 | 4906.68 | 3155.37 | 4579.65 |
| 2502 | 1631.78 | 4933.47 | 3175.53 | 4453.66 |
| 3000 | 1665.62 | 5020.59 | 3164.52 | 4396.52 |

From the above tables it is very evident that the plant-based egg analogue behaves similarly in compared to the real egg liquid in terms of its rheology (G', G"). The texture, feel and appearance of the plant-based egg analogue product of the invention, is very similar to the real egg.

## Claims

1. A plant protein-based egg analogue composition comprising:
a) 4 to 20 % by weight of mung bean protein isolate,
b) 5 to 20 % by weight of edible vegetable oil,
c) 0.01 - 5% by weight of edible polysaccharide, and
d) Water.

2. The composition according to claim 1 further comprising edible salt.

3. The composition according to claim 2 wherein the edible salt is sodium chloride.

4. The composition according to any one of the preceding claims 1 or 2 comprising an emulsifier.

5. The composition according to any one of the preceding claims wherein the edible polysaccharide is selected from corn starch, wheat starch, tapioca starch, mung bean starch or mixtures thereof.

6. The composition according to claim 1 wherein the mung bean protein isolate is prepared by subjecting a dispersion comprising mung bean flour in water to pulse electric field.

7. The composition according to claim 6 wherein strength of the pulse electric field is in the range from 72 µs to 547 µs.

8. The composition according to claim 7 wherein the strength of the pulse electric field is in the range from 200 µs to 450 µs.

9. The composition according to claim 6 wherein pulse frequency of the pulse electric field is in the range from 22 kV/cm to 38 kV/cm.

10. A process of producing a mung bean protein isolate comprising the step of treating a dispersion of mung bean flour in water with a pulse electric field.

11. A process according to claim 10 further comprising a step of adjusting the pH of the dispersion from 8 to 10.

12. A process according to claim 11 further comprising a step of addition of sodium tripolyphosphate to the dispersion.

13. A process according to claim 12 further comprising a step of subjecting the dispersion to a gyratory motion.

14. A process according to claim 10 wherein strength of the pulse electric field is in the range from 72 µs to 547 µs.

15. A process according to claim 10 wherein pulse frequency of the pulse electric field is in the range from 22 kV/cm to 38 kV/cm.
